# EUROPÄISCHE PATENTSCHRIFT

(11) **EP 1 245 536 B1**
(45) Veröffentlichungstag und Bekanntmachung des Hinweises auf die Patenterteilung: **04.01.2006**
(21) Anmeldenummer: 02006267.5
(22) Anmeldetag: 20.03.2002
(51) Int. Cl.: C02F 1/32

(54) **UV-Desinfektionseinrichtung**
UV disinfection device
Dispositif de désinfection par ultra-violets

(30) Priorität: 27.03.2001 DE 20105357 U; 13.03.2002 DE 20204094 U
(43) Veröffentlichungstag der Anmeldung: 02.10.2002
(73) Patentinhaber: ALTURA LEIDEN HOLDING B.V., 4131 LX Vianen ZH (NL)
(72) Erfinder:
(74) Vertreter: Schmitt, Meinrad

(56) Entgegenhaltungen:
- WO-A-00/32244
- WO-A-99/10282
- DE-A- 2 003 989
- US-A- 5 266 215
- US-A- 6 120 691

## Beschreibung

Die Erfindung bezieht sich auf eine Desinfektionseinrichtung zur Wasserdesinfektion einer Sanitäreinrichtung gemäß der im Oberbegriff des Patentanspruchs 1 angegebenen Merkmale.

Aus der WO 99 10 282 ist eine derartige Desinfektionseinrichtung mit einem Gehäuse bekannt, welches ein Rohr enthält, wobei zwischen diesem und einem im Inneren desselben angeordneten UV-Strahlers ein vom Wasser durchströmbarer Behandlungsraum vorgesehen ist. An einem Ende des Rohres ist ein Boden zur Befestigung eines Anschlußsockels des UV-Strahlers angeordnet und am anderen Ende ist ein Deckel vorgesehen. Im Bereich des Anschlußsockels ist ein erster winkelförmig ausgebildeter Anschlußstutzen vorgesehen und in geeigneter Weise mit dem Rohr verbunden. Der genannte Deckel ragt in die Öffnung des anderen freien Rohrendes hinein und enthält einen weiteren Anschlußstutzen, dessen Querschnitt erheblich kleiner ist als der Querschnitt des Rohres bzw. als der Querschnitt des Behandlungsraumes. Im Inneren des Rohres ist eine erste Zwischenplatte zur Unterteilung in einen Zuströmraum und in einen Behandlungsraum angeordnet, wobei in diesem eine Filtervorrichtung vorgesehen ist. Der genannte abgewinkelte Anschlußstutzen mündet in den Zuströmraum im Bereich des Anschlußsockels, welcher aus zwei Teilen gebildet ist und Spulen eines Transformators zur Vermeidung einer galvanischen Verbindung zwischen den beiden Sockelteilen enthält.

Ferner ist aus der US-5 266 215 A eine Desinfektionseinrichtung bekannt, deren rohrförmiges Gehäuse an einem Ende mit einem Einlaßkörper und am anderen Ende mit einem Endkörper abgeschlossen ist. Die genannten Körper sind jeweils mit Außengewinden versehen, welche in korrespondierende Innengewinde an den jeweiligen Enden des Gehäuserohres eingeschraubt sind. Der Einlaßkörper enth,ält eine zentrale Öffnung zur Aufnahme des Sockels des UV-Strahlers. Weiterhin enthält der Einlaßkörper einen Einlaß und einen teilweise ringförmigen Durchgangskanal, welcher in eine zum Innenraum offene Ausnehmung des Einlaßkörpers mündet. Der Einlaß und der genannte Durchgangskanal des Einlaßkörpers sowie eine in dem genannten Endkörper weisen Querschnittsflächen auf, welche kleiner sind als der im Inneren des Gehäuserohres UV-Strahler aufweist, dessen Strahlung auf das durchströmende Wasser gerichtet ist. Der UV-Strahler ist in einem Gehäuse angeordnet, wobei zwischen dem UV-Strahler und dem Gehäuse ein im wesentlichen koaxialer und vom Wasser durchströmbarer Behandlungsraum vorhanden ist. Am anderen Ende des Gehäuses ist mittels eines Aufnahmesockels der UV-Strahler festgelegt, wobei zwischen dem Aufnahmesockel und dem Gehäuse ein ringförmiger Wasserzulaufraum vorhanden ist, in welchen im wesentlichen orthogonal zur Längsachse eine Wasserzulauföffnung mündet. Der Strömungsquerschnitt des den genannten Aufnahmesockel umgebenden Wasserzulaufraumes ist vergleichsweise gering, und auch im Bereich des Auslaufkopfes ist ein vergleichsweise geringer Strömungsquerschnitt vorhanden, wodurch Druckverluste entstehen können, zumal im Auslaufkopf eine Strömungsumlenkung radial nach außen im wesentlichen orthogonal zur Längsachse erfolgt. Eine Vergrößerung der Strömungsquerschnitte würde eine nicht unerhebliche Vergrößerung der Außenabmessungen des Desinfektionseinrichtung erfordern.

Hiervon ausgehend liegt der Erfindung die Aufgabe zugrunde, die Desinfektionseinrichtung der genannten Art dahingehend weiterzubilden, dass mit einem geringen konstruktiven Aufwand die Strömungsbedingungen optimiert und Druckverluste reduziert werden. Die Desinfektionseinrichtung soll mit wenigen Bauteilen in einfacher Weise und mit geringem Montage- und Materialaufwand herstellbar sein. Des weiteren soll die Integration in ein Rohrleitungssystem zur Wasserversorgung der Sanitäreinrichtung problemlos und mit einfachen Mitteln durchführbar sein.

Die Lösung dieser Aufgabe erfolgt gemäß der im Patentanspruch 1 angegebenen Merkmale.

Die erfindungsgemäße Desinfektionseinrichtung zeichnet sich durch eine einfache und funktionssichere Konstruktion aus und bedingt nur geringfügige Druckverluste des durchströmenden Wassers. Das Gehäuse enthält ein ringförmiges Rohr, in welches der UV-Strahler hineinragt, sowie ein T-Rohrstück mit einem Stutzen mit der ersten Öffnung. Das T-Rohrstück und das sich in Richtung der Längsachse erstreckende Rohr sind dicht und fest miteinander verbunden, insbesondere durch Kleben oder Schweißen. Das freie Ende des Rohres bildet die zweite Öffnung, wobei die beiden Öffnungen große Strömungsquerschnitte aufweisen, so dass Strömungsverluste vermieden werden. Der zur Längsachse im wesentlichen koaxiale ringförmige Behandlungsraum weist zumindest näherungsweise über die gesamte Längserstreckung des UV-Strahlers und / oder des Rohres und / oder bis zur zweiten Öffnung gleichfalls einen großen freien Querschnitt auf, wobei auch hier nur geringe Strömungsverluste entstehen. Der Stutzen mit der ersten Öffnung ist axial beabstandet zu einem Aufnahmesockel des UV-Strahler angeordnet, wobei das insbesondere durch die erste Öffnung einströmende Wasser unmittelbar auf den UV-Strahler strömt, so dass auch in diesem Bereich nur minimale, praktisch vernachlässigbare Druckverluste entstehen. Der genannte Aufnahmesockel ist diametral zur zweiten Öffnung im Rohrteil des T-Rohrstückes befestigt, insbesondere mittels einer Schraubverbindung, so dass die Montage und eventuelle Servicearbeiten problemlos durchführbar sind. In bevorzugter Weise sind im Bereich der beiden Öffnungen zum Anschluss von Rohrleitungen Verbindungsmittel vorgesehen, welche insbesondere Außengewinde enthalten. Mit Überwurfmuttern oder dergleichen kann somit problemlos und mit geringem Material- und Fertigungsaufwand der Anschluss und die Integration in ein Rohrleitungssystem erfolgen. Das T-Rohrstück, das mit diesem dicht verbundene Rohr und die Verbindungsmittel können in bevorzugter Weise als einfache handelsübliche Bauteile ausgebildet sein, wodurch ein kostengünstiger Aufbau gewährleistet ist und aufwändige Sonderformteile nicht erforderlich sind.

In vorteilhafter Weise ist der UV-Strahler mit einer vergleichsweise geringen Leistung im Bereich zwischen 14 bis 20 Watt, insbesondere von näherungsweise 16 Watt, ausgelegt, so dass nur ein geringer Energieeinsatz erforderlich ist. Das Gehäuse besteht bevorzugt aus UV-beständigen ABS und entspricht den Vorschriften, insbesondere den KTW-Empfehlungen, auf physiologische und toxologische Unbedenklichkeit. In einer besonderen Ausgestaltung gelangen für das Gehäuse Standardbauteile mit Nennweiten DN 50, also mit Rohraußendurchmessern oder für Rohraußendurchmesser von 50 mm, zum Einsatz. Dies gilt insbesondere für die Verbindungsmittel, welche als Hülsen oder Muffen, welche auf den Außenflächen des Stutzens bzw. des freien Rohrendes des Gehäuses befestigt sind. Der Anschluss und die Integration in ein Rohrleitungssystem sind somit problemlos durchführbar, wobei ohne weiteres auch ein nachträglicher Einbau möglich ist. Bei Einsatz der Desinfektionseinrichtung in einem Whirl-Pool ist in vorteilhafter Weise die Desinfektionseinrichtung in Strömungsrichtung vor der Umwälzpumpe angeordnet. Die Steuerung erfolgt mittels eines Bedienfeldes, wobei die einzelnen Funktionen sowie die Whirldauer und -intensität über entsprechende Funktionstasten ausgewählt werden. In zweckmäßiger Weise erfolgt das Zuschalten der Desinfektionseinrichtung während des Whirlbetriebs, also zeitlich nach dem Einschalten der Umwälzpumpe. Das System ist gegen eine Fehlschaltung der Umwälz- und / oder Jetpumpe gesichert, und des weiteren ist die Aktivierung der Desinfektionseinrichtung nur bei einem vorgegebenen und / oder entsprechend hohem Wasserstand in der Whirlwanne möglich. Darüber hinaus sei festgehalten, dass die Gefahr durch Überhitzen der Desinfektionseinrichtung selbst bei Trockenlauf nicht gegeben ist, da der UV-Strahler, insbesondere aufgrund der oben erwähnten geringen Leistung, eine maximal zulässige Reaktortemperatur, insbesondere von näherungsweise 80° C, nicht erreicht. Insoweit ist von besonderer Bedeutung, dass der Behandlungsraum einen großen Querschnitt aufweist, und in diesem Behandlungsraum keine weiteren Einrichtungen, wie Filter, Umlenkungen oder ähnliches, vorhanden sind. Insoweit ist ferner von Bedeutung, dass das den Strahler umgebende Rohr, welches ein handelsüblicher Rohrteil ist, eine vergleichsweise geringe Wanddicke aufweist und die Außenfläche des Rohres frei liegt, und bei einem unerwünschten Trockenlauf die Wärme über die Außenfläche des Gehäuserohres ungehindert abgegeben werden kann. Obgleich die Anordnung der Desinfektionseinrichtung vor der Umwälzpumpe oder Jetpumpe sich als besonders zweckmäßig erwiesen hat, ist die Integration in eine andere Wasser führende Leitung, beispielsweise in Strömungsrichtung direkt hinter der Pumpe oder in einzelnen Strängen oder im Bereich der Düsen einer Jetwanne, ohne weiteres möglich.

Besondere Ausgestaltungen und Weiterbildungen der Erfindung sind in den Unteransprüchen sowie der Beschreibung von Ausführungsbeispielen angegeben.

Die Erfindung wird nachfolgend an Hand der in der Zeichnung dargestellten Ausführungsbeispiele näher erläutert, ohne dass insoweit eine Beschränkung erfolgt. Es zeigen:
- Fig. 1: schematisch einen Schnitt in einer axialen Schnittebene,
- Fig. 2: teilweise im Schnitt und teilweise in einer schematischen Darstellung eine besondere Ausgestaltung der Desinfektionseinrichtung.

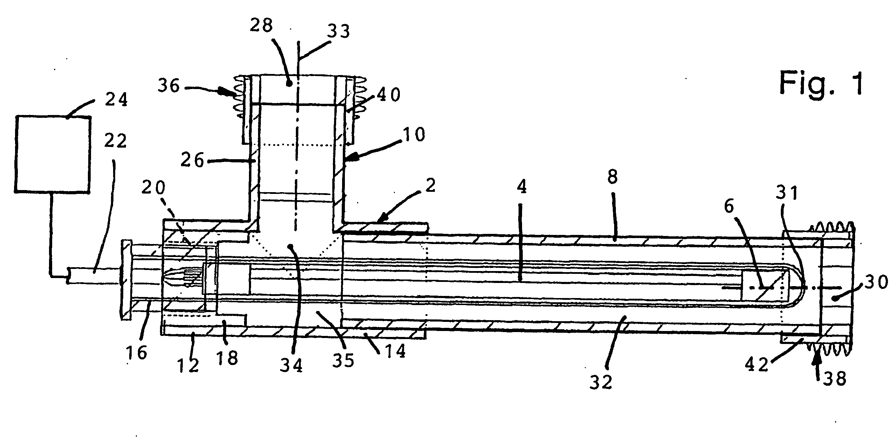

Gemäß Fig. 1 enthält die Desinfektionseinrichtung ein Gehäuse 2, in welchem ein UV-Strahler 4 in Richtung einer Längsachse 6 angeordnet ist. Das Gehäuse weist koaxial zur Längsachse 6 ein Rohr 8 auf, welches mit einem T-Rohrstück 10 fest und dicht, insbesondere durch Kleben oder Schweißen verbunden ist. Das T-Rohrstück enthält ein erstes Rohrteil 12 und ein zweites Rohrteil 14, welches bevorzugt als eine Muffe zur Aufnahme und Verbindung eines Endes des genannten zur Längsachse 6 koaxialen Rohres 8 ausgebildet ist. Das erste Rohrteil 12, welches gleichfalls koaxial zur Längsachse 6 angeordnet ist, ist zur Befestigung eines Aufnahmesockels 16 des UV-Strahlers 4 vorgesehen und ausgebildet. Hierzu ist im Inneren des ersten Rohrteils 12 bevorzugt eine Hülse oder Reduziermuffe 18 vorgesehen, in welche der Aufnahmesockel 16 insbesondere über eine Schraubverbindung 20 verbunden ist, wobei zweckmäßig hier nicht weiter dargestellte Dichtungsringe oder sonstige Dichtungsmittel vorgesehen sind. Zur Stromversorgung des UV-Strahlers 4 ist in den Aufnahmesockel 16 ein Kabel 22 eingeführt. Über das Kabel 22 erfolgt die elektrische Verbindung mit einem Vorschaltgerät 24, welches bevorzugt als ein voll gekapseltes elektronisches Vorschaltgerät in der hohen Schutzklasse IP 65 ausgebildet ist.

Das T-Rohrstück 10 enthält einen bevorzugt orthogonal zur Längsachse 6 ausgerichteten Stutzen 26, dessen freies Ende die erste Öffnung 28 bildet. Das gemäß Zeichnung rechts liegende freie Ende des Rohres 8 bildet die zweite Öffnung 30. In bevorzugter Weise ist die erste Öffnung 28 für den Wasserzulauf und die zweite Öffnung für den Wasserablauf ausgebildet, doch kann alternativ die Durchströmung der Desinfektionseinrichtung in umgekehrter Richtung erfolgen. Der Strahler 4 ragt vom Aufnahmesockel 16 durch das T-Rohrstück 10 und praktisch über die gesamte Länge des bevorzugt zylindrischen Rohres 8 in dieses hinein, wobei lediglich im Bereich der zweiten Öffnung 30 ein vergleichsweise kurzer Abstand des freien Strahlerendes 31 zum freien Rohrende vorhanden ist. Zwischen dem Strahler 4 und der Innenwandung des Rohres 8 ist ein ringförmiger Behandlungsraum 32 vorhanden, durch welchen das Wasser frei und ungehindert mit vernachlässigbarem Druckabfall strömen kann. Es sei festgehalten, dass in dem ringförmigen Behandlungsraum die UV-Strahlung des Strahlers 4 zur Desinfektion der durchströmenden Wassers gelangt.

Es ist von besonderer Bedeutung, dass eine Axialebene 33, welche den Stutzen 10 schneidet und / oder in welcher ein Eintrittsbereich 34 des Wassers liegt, beziehungsweise der Stutzen 26 axial beabstandet zum Aufnahmesockel 16 angeordnet sind. Der Eintrittsbereich 34 des Wassers oder des Innenraumes des Stutzens 26 steht unmittelbar mit dem Behandlungsraum 32 in Verbindung, und / oder der Innenraum des Stutzens 26 mündet direkt, bevorzugt orthogonal in einen Anfangsbereich 35 des Behandlungsraums 32 mit dem UV-Strahler 4. Der Behandlungsraum 32 erstreckt sich axial vom Aufnahmesockel 16 beginnend in einem Anfangsbereich 35 durch die Axialebene 33 am Eintrittsbereich 34 vorbei durch das Rohr 8 bis zur zweiten Öffnung 30 mit im wesentlichen konstanter Querschnittsfläche. Das durch die erste Öffnung 28 und den Stutzen 26 insbesondere einströmende Wasser gelangt somit unmittelbar in den Bereich des Strahlers 4, wobei Verengungen des Strömungsquerschnittes in vorteilhafter Weise vermieden werden. Wie ersichtlich, ist nur eine einmalige Umlenkung des Wassers in dem Eintrittsbereich 34 des Stutzens erforderlich, wodurch Verwirbelungen und / oder Druckverluste gering gehalten werden.

Im Bereich der Öffnungen 28 und 30 sind bevorzugt auf der Außenfläche des Stutzens 26 bzw. des freien Endes des Rohres 8 Verbindungsmittel 36, 38 angeordnet. Diese Verbindungsmittel 36, 38 enthalten in vorteilhafter Weise Hülsen 40, 42, welche insbesondere Außengewinde aufweisen und / oder welche bevorzugt mit der Außenfläche des Stutzens 26 bzw. des freien Endes des Rohres 8, insbesondere durch Kleben oder Schweißen dicht und fest verbunden sind. Auch die Verbindungsmittel 36, 38 sind insbesondere handelsübliche und / oder einfache Bauteile, so dass die Herstellkosten gering gehalten werden.

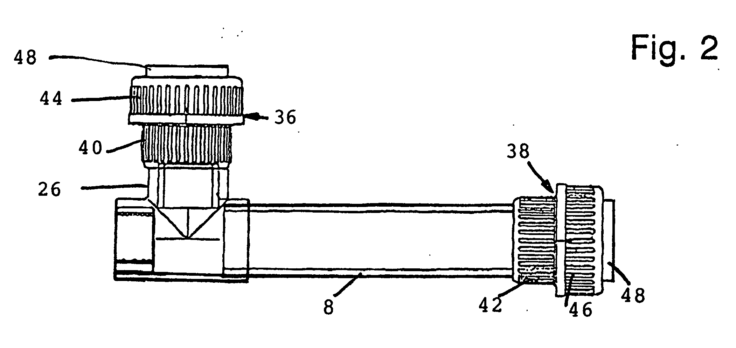

Fig. 2 zeigt teilweise in einer Ansicht und teilweise geschnitten die Desinfektionseinrichtung, wobei nunmehr an den Enden des Stutzens 26 und des Rohres 8 als Verbindungsmittel 36 bzw. 38 konventionelle Verschraubungen angeordnet sind. Diese Verschraubungen enthalten Überwurfmuttern 44, 46 zur Festlegung von Einlegeteilen 48, 50, über welchen bekannter Weise die Verbindung mit dem Rohrleitungssystem erfolgen kann. Die Einlegeteile 48, 50 können auch aus einem anderen Kunststoff als das Gehäuse bestehen, beispielsweise aus PVC-U, um somit problemlos die Verbindung mit einem entsprechenden Rohrleitungssystem durchführen zu können. Es sei festgehalten, dass in alternativen Ausführungsformen die Verbindungsmittel 36, 38 auch als Klemmverbindungen, Einsteckverbindungen oder dergleichen ausgebildet sein können.

### Bezugszeichen

- 2: Gehäuse
- 4: UV-Strahler
- 6: Längsachse
- 8: Rohr
- 10: T-Rohrstück
- 12: erstes Rohrteil
- 14: zweites Rohrteil
- 16: Aufnahmesockel von 4
- 18: Hülse / Reduzierstück
- 20: Gewindeverbindung
- 22: Kabel
- 24: Vorschaltgerät
- 26: Stutzen von 10
- 28: erste Öffnung
- 30: zweite Öffnung
- 31: freies Ende von 4
- 32: Behandlungsraum
- 33: Axialebene
- 34: Eintrittsbereich von 26
- 35: Anfangsbereich von 32
- 36, 38: Verbindungsmittel
- 40, 42: Hülse / Muffe
- 44, 46: Überwurfmutter
- 48, 50: Einlegeteil

## Patentansprüche

1. Desinfektionseinrichtung zur Wasserdesinfektion einer Sanitäreinrichtung, insbesondere eines Whirlpools, enthaltend in einem Gehäuse (2) einen UV-Strahler (4), wobei das Gehäuse (2) eine erste und eine zweite Öffnung (28, 30) aufweist, welche einen Wasserzulauf und einen Wasserablauf bilden, wobei zwischen dem Gehäuse (2), welches ein sich in Richtung einer Längsachse (6) des Gehäuses (2) erstreckendes Rohr (8) enthält, und dem UV-Strahler (4) ein ringförmiger, vom Wasser durchströmbarer und sich in Richtung der Längsachse (6) des.Gehäuses (2) erstreckender Behandlungsraum (32) vorgesehen ist, wobei ferner die zweite Öffnung (30) axial anschließend an das freie Ende (31) des UV-Strahlers (4) am freien axialen Ende des Gehäuses (2) angeordnet ist, und wobei am axialen Ende des Gehäuses (2) im wesentlichen koaxial zur Längsachse (6) angeordnete Verbindungsmittel (38) für eine Rohrleitung vorgesehen sind, **dadurch gekennzeichnet, dass** die erste Öffnung (28) in einer Axialebene (33) angeordnet ist, welche zwischen einem Aufnahmesockel (16) des UV-Strahlers (4) und der zweiten Öffnung (30) liegt, dass das Gehäuse (2) ein T-Rohrstück (10) mit einem Stutzen (26) enthält, dessen freies Ende die erste Öffnung (28) bildet, dass das freie axiale Ende des Rohres (8) die zweite Öffnung (30) bildet und dass an den freien Enden des Stutzens (26) und des Rohres (8) auf deren Außenflächen die Verbindungsmittel (36, 38) angeordnet sind.

2. Desinfektionseinrichtung nach Anspruch 1, **dadurch gekennzeichnet, dass** ein mit der ersten Öffnung (28) über einen Innenraum eines Stutzens (10) in Verbindung stehender Eintrittsbereich (34) in der Axialebene (33) angeordnet ist, welche den Anfangsbereich (35) des Behandlungsraums (32) schneidet.

3. Desinfektionseinrichtung nach Anspruch 1 oder 2, **dadurch gekennzeichnet, dass** das T-Rohrstück (10) ein erstes Rohrteil (12) aufweist, in welchem der UV-Strahler (4) mittels des Aufnahmesockels (16), bevorzugt lösbar angeordnet ist.

4. Desinfektionseinrichtung nach einem der Ansprüche 1 bis 3, **dadurch gekennzeichnet, dass** das T-Rohrstück (10) ein zweites Rohrteil (14) aufweist, mit welchem das Rohr (8) dicht und fest verbunden ist.

5. Desinfektionseinrichtung nach einem der Ansprüche 1 bis 4, **dadurch gekennzeichnet, dass** der Eintrittsbereich (34) des Stutzens (26) oder des Wassers axial beabstandet zum Aufnahmesockel (16) des UV-Strahlers (4) angeordnet ist.

6. Desinfektionseinrichtung nach einem der Ansprüche 1 bis 5, **dadurch gekennzeichnet, dass** der UV-Strahler (4) den Eintrittsbereich (34) durchdringt und / oder dass im Eintrittsbereich (34) das Wasser unmittelbar den Strahler (4) anströmt oder umströmt.

7. Desinfektionseinrichtung nach einem der Ansprüche 1 bis 6, **dadurch gekennzeichnet, dass** die Verbindungsmittel (36, 38) eine Hülse oder Muffe (40, 42) enthalten und / oder dass die Verbindungsmittel (36, 38) Außengewinde aufweisen.

8. Desinfektionseinrichtung nach einem der Ansprüche 1 bis 7, **dadurch gekennzeichnet, dass** die Verbindungsmittel (36, 38) mit dem freien Ende des Stutzens (26) und / oder des Rohres (8) dicht und fest, insbesondere durch Kleben oder Schweißen, verbunden sind.

9. Desinfektionseinrichtung nach einem der Ansprüche 1 bis 8, **dadurch gekennzeichnet, dass** der Behandlungsraum (32) über die gesamte Länge des UV-Strahlers (4) eine im wesentlichen konstante Querschnittsfläche aufweist.

## Claims

1. Disinfection apparatus for disinfecting water in a sanitary appliance, in particular a whirlpool, containing a UV emitter (4) in a housing (2), the housing (2) having a first and a second orifice (28, 30), forming a water supply and a water discharge, wherein between the housing (2), containing a pipe (8) extending in the direction of a longitudinal axis (6) of the housing (2), and the UV emitter (4) an annular treatment ch2mber (32), through which water can flow and extending in the direction of the longitudinal axis (6) of the housing (2), wherein the second orifice (30) is further arranged axially adjoining the open end (31) of the UV emitter (4) on the open axial end of the housing (2) and wherein connecting means (38) for a conduit, arranged on the axial end of the housing (2) substantially coaxially to the longitudinal axis (6), are provided, **characterised in that** the first orifice (28) is arranged in an axial plane (33) which lies between a retaining base (16) of the UV emitter (4) and the second orifice (30), the housing (2) contains a T-shaped pipe piece (10) with a connecting branch (26), the open end of which forms the first orifice (28), the open axial end of the pipe (8) forms the second orifice (30) and the connecting means (36, 38) are arranged on the open ends of the connecting branch (26) and the pipe (8) on their outer faces.

2. Disinfection apparatus according to claim 1, **characterised in that** an entry region (34) connected to the first orifice (28) via an interior of a connecting branch (10) is arranged in the axial plane (33) which intersects the initial region (35) of the treatment chamber (32).

3. Disinfection apparatus according to claim 1 or 2, **characterised in that** the T-shaped pipe piece (10) has a first pipe part (12) in which the UV emitter (4) is arranged, preferably detachably, by means of the retaining base (16).

4. Disinfection apparatus according to one of claims 1 to 3, **characterised in that** the T-shaped pipe piece (10) has a second pipe part (14) to which the pipe (8) is imperviously and rigidly connected.

5. Disinfection apparatus according to one of claims 1 to 4, **characterised in that** the entry region (34) of the connecting branch (26) or the water is arranged at an axial distance from the retaining base (16) of the UV emitter (4).

6. Disinfection apparatus according to one of claims 1 to 5, **characterised in that** the UV emitter (4) penetrates the entry region (34) and/or the water flows directly onto or round the emitter (4) in the entry region (34).

7. Disinfection apparatus according to one of claims 1 to 6, **characterised in that** the connecting means (36, 38) contain a sleeve or muff (40, 42) and/or the connecting means (36, 38) have outer threads.

8. Disinfection apparatus according to one of claims 1 to 7, **characterised in that** the connecting means (36, 38) are imperviously and rigidly connected to the open end of the connecting branch (26) and/or of the pipe (8), in particular by gluing or welding.

9. Disinfection apparatus according to one of claims 1 to 8, **characterised in that** the treatment chamber (32) has a substantially constant cross-sectional face over the entire length of the UV emitter (4).

## Revendications

1. Dispositif de désinfection pour la désinfection de l'eau dans un dispositif sanitaire, en particulier un bain à remous, comprenant, dans un boîtier (2), un émetteur (4) d'UV, le boîtier (2) comprenant une première et une deuxième ouvertures (28, 30) qui forment une arrivée d'eau et une sortie d'eau, dans lequel il est prévu, entre le boîtier (2), lequel comprend un tube (8) s'étendant dans la direction d'un axe longitudinal (6) du boîtier (2), et l'émetteur d'UV (4), une chambre de traitement (32) annulaire pouvant être parcourue par l'eau et s'étendant dans la direction de l'axe longitudinal (6) du boîtier (2), la deuxième ouverture (30) étant placée de plus à la suite axialement de l'extrémité libre (31) de l'émetteur (4) d'UV à l'extrémité axiale libre du boîtier (2), et des moyens de jonction (38) pour une canalisation étant prévus à l'extrémité axiale du boîtier (2) pour l'essentiel de manière coaxiale à l'axe longitudinal (6),
***caractérisé en ce que*** la première ouverture (28) est placée dans un plan axial (33) qui se trouve entre un socle réceptacle (16) de l'émetteur (4) d'UV et la deuxième ouverture (30), ***en ce que*** le boîtier (2) comprend un élément en T (10) avec un embout (26) dont l'extrémité libre forme la première ouverture (28), ***en ce que*** l'extrémité axiale libre du tube (8) forme la deuxième ouverture (30) et ***en ce qu***'aux extrémités libres de l'embout (26) et du tube (8), sur leurs surfaces extérieures, sont placés les moyens de jonction (36, 38).

2. Dispositif de désinfection selon la revendication 1, ***caractérisé en ce* qu'**une zone d'entrée (34) communiquant avec la première ouverture (28) par l'intermédiaire d'un intérieur d'un embout (10) est placée dans le plan axial (33) qui coupe la zone de début (35) de la chambre de traitement (32).

3. Dispositif de désinfection selon la revendication 1 ou 2, ***caractérisé en ce que*** l'élément en T (10) comporte une première partie tubulaire (12) dans laquelle l'émetteur (4) d'UV est placé de préférence amovible au moyen du socle réceptacle (16).

4. Dispositif de désinfection selon l'une quelconque des revendications 1 à 3, ***caractérisé en ce que*** l'élément en T (10) comporte une deuxième partie tubulaire (14) à laquelle le tube (8) est relié de manière hermétique et fixe.

5. Dispositif de désinfection selon l'une quelconque des revendications 1 à 4, ***caractérisé en ce que*** la zone d'entrée (34) de l'embout (26) ou de l'eau est placée à distance axiale du socle réceptacle (16) de l'émetteur (4) d'UV.

6. Dispositif de désinfection selon l'une quelconque des revendications 1 à 5, ***caractérisé en ce que*** l'émetteur d'UV (4) traverse la zone d'entrée (34) et/ou ***en ce que**,* dans la zone d'entrée (34), l'eau atteint ou entoure directement l'émetteur (4).

7. Dispositif de désinfection selon l'une quelconque des revendications 1 à 6, ***caractérisé en ce que*** les moyens de jonction (36, 38) comprennent une douille ou manchon (40, 42) et/ou ***en ce que*** les moyens de jonction (36, 38) comportent des filetages extérieurs.

8. Dispositif de désinfection selon l'une quelconque des revendications 1 à 7, ***caractérisé en ce que*** les moyens de jonction (36, 38) sont reliés à l'extrémité libre de l'embout (26) et/ou du tube (8) de manière hermétique et fixe, en particulier par collage ou soudage.

9. Dispositif de désinfection selon l'une quelconque des revendications 1 à 8, ***caractérisé en ce que*** la chambre de traitement (32) comporte, sur toute la longueur de l'émetteur (4) d'UV, une surface de section transversale sensiblement constante.
